# EUROPEAN PATENT SPECIFICATION

(11) **EP 1 349 028 B1**
(45) Date of publication and mention of the grant of the patent: **25.07.2007**
(21) Application number: 03006005.7
(22) Date of filing: 18.03.2003
(51) Int. Cl.: G05B 19/416, E06B 9/82

(54) **Control device of a roller shutter driving motor**
Steuervorrichtung eines Rolladen antreibenden Motors
Dispositif de commande d'un moteur d'entraînement d'un volet roulant

(30) Priority: 19.03.2002 IT VI20020047
(43) Date of publication of application: 01.10.2003
(73) Proprietor: FITEM SRL, 30030 Maerne (VE) (IT)
(72) Inventor: Berengo, Giorgia, 30174 Mestre (VE) (IT)
(74) Representative: Bonini, Ercole

(56) References cited:
- EP-A- 0 435 719
- EP-A- 0 671 676
- EP-A- 0 784 146
- DE-A- 4 020 395
- US-A- 5 621 295
- US-B1- 6 215 265

## Description

The invention is about a control device for rolling/unrolling units of flexible elements, particularly curtains, shutters or alike.

It is known that for the rolling and unrolling of curtains or shutters appropriate rolling/unrolling units are used which are made of electrical ratio motors, equipped with adjustable limit stop means and suitable braking means.

Usually available on the market driving units comprise a winding roller placed outside of a tubular body with a mostly longitudinal development wherein an electrical motor is housed which is connected on one side to a reduction unit equipped with a projecting output shaft and on the opposite side to braking means.

Furthermore, inside of the tubular body the braking means, usually consisting of an electrical brake, and the limit stops, generally consisting of a micro switch of the electromechanical kind are located.

The electrical motor is usually of the reversible asynchronous mono phase type fit to operate in both clockwise and counterclockwise directions of rotation. This allows to make the upward and downward rolling and unrolling of either curtains or shutters.

An inconvenience of the state of the art rolling/unrolling units consists in that due to the variation of the inherent mechanical features and due to the elasticity of the curtains and shutters in time, the rolling and/or unrolling wears out compared to the initial conditions after the assembly.

As a matter of fact it is known that the upward or downward stopping positions during the rolling and unrolling, are adjusted in the assembly phase through a manual mechanical calibration of the limit stop means carried out by the assembler.

The position of the limit stops carried out in that manner remains fixed during the normal operation of the rolling/unrolling units while the size of the curtains, and more specifically of their length, as previously said, vary by causing the stop of the curtain in different positions from the desired ones.

In order to remedy to such inconveniences some control devices are used which allow during the final phase of rolling or unrolling the operation of the electrical motor with either reduced velocity or torque compared to the normal operation for at least one time interval right after the actuation of the mechanical limit stops.

In such manner, a condition referred to as "over stroke" is determined which allows a further rolling/unrolling phase following the actuation of the limit stops.

US-A-5,621,295 shows a device for driving a body by means of an electric motor, comprising mechanical means for measuring the displacement of said body which are kinematically linked to the body and are equipped with switches actuated by the mechanical measurement means at certain points on the trajectory of the body. The device comprises means in the form of an analogue electronic circuit for initializing a phase for specific powering of the motor such as power supply at reduced torque for a timed duration or power supply at reduced voltage or cut-off of the power supply, switched in by actuation of at least one of said switches.

A problem of such technique consists in that said control devices use limit stops of the mechanical type, which are subject to wear phenomena in time and to thermal expansion that compromise their precision, response quickness and reliability.

It is an object of the present invention that of remedying to such inconveniencies.

The invention's object is that of making a control device for rolling/unrolling units whose operation would turn out to be more reliable in time compared to the state of the art rolling/unrolling units.

Said object is accomplished by a control device for rolling/unrolling units of flexible elements the main features of which are according to Claim 1.

According to a preferred embodiment, the detecting means are of the optical kind and the variation of the operation with a nominal torque consisting in reducing such torque through the insertion of an auxiliary condenser with a lower capacity in place of the main condenser.

In a different embodiment the reduction of the torque takes place through the voltage chocking applied to the main condenser in a half cycle inside of a mains voltage cycle.

The duration of the interval can be fixed and stored into the logical unit in the calibration phase or, in a different embodiment, determined through the detection of the blocking of the winding roller.

Advantageously, the time interval operating with a reduced torque is independent from the mechanical limit stop means.

Said objects and advantages will be better highlighted in an explanatory but not limiting way during the description of some preferred embodiments of the invention with reference to the annexed drawings wherein:
- Figure 1 shows the control device of the invention applied to the rolling/unrolling unit;
- Figure 2 shows the operative logic diagram of the control device of the invention;
- Figure 2a shows an embodiment of figure 2;
- Figure 3 is a detail of figure 2 operating with a reduced torque;
- Figure 4 shows an embodiment of figure 2;
- Figure 5 is a detail of an embodiment of figure 2;
- Figure 6 shows the device of figure 5 operating with a reduced torque;
- Figure 7 shows the course of the voltage in time across of the main condenser of the invented device of figure 5.

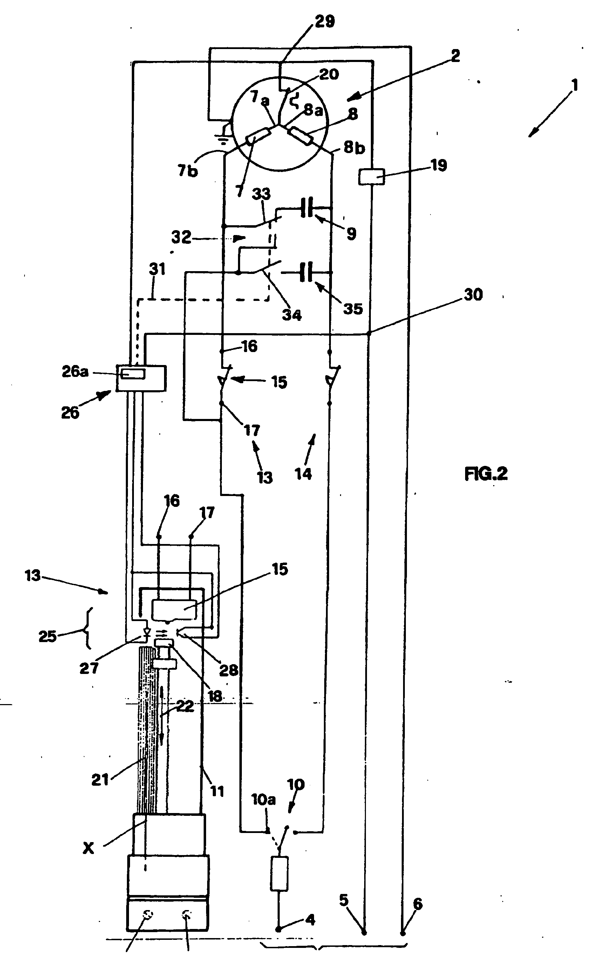

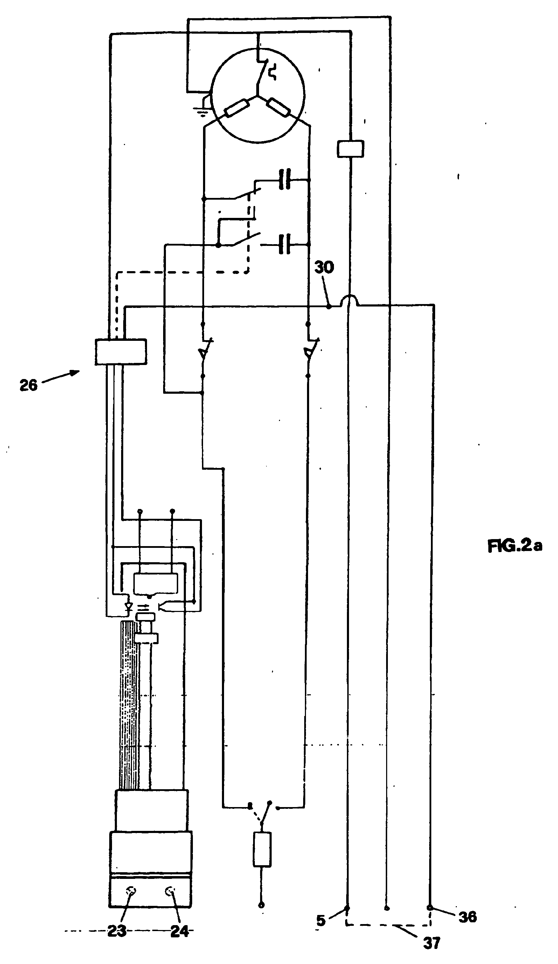

The control device of the invention is shown in figure 2 wherein is generally indicated with 1.

This comprises an asynchronous mono phase electrical phase motor 2 of the reversible type connected to a feeding network, generally indicated with 3, where a line wire 4, a neutral wire 5 and a ground wire 6 are defined.

The electrical motor 2 has two windings 7, 8 for the rotation according to either the clockwise or counterclockwise direction, and is equipped with a main condenser 9 arranged between the two windings 7, 8 for the operation with a nominal torque of the same motor 2.

The two windings 7, 8 have an end 7a, 8a merging into a node connected to the neutral wire 5 through a traditional thermal protection device 20, while the other end 7b, 8b is selectively connected to the line wire 4 through a switch 10 which allows the selection of the direction of rotation of the motor 2.

The electrical motor 2 is also advantageously equipped with an electrical brake 19 arranged between the node defined by the end 7a, 8a of the two windings 7, 8 and the neutral wire 5.

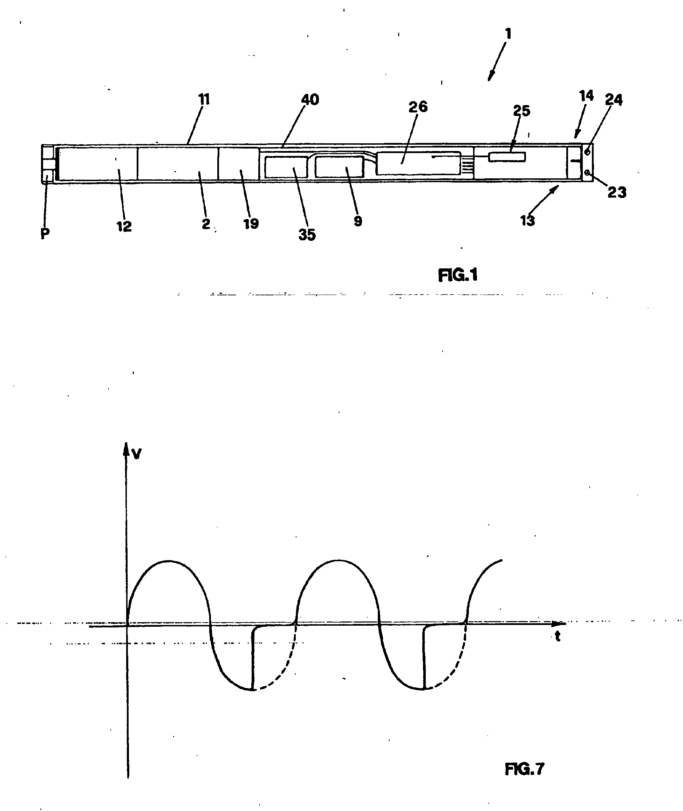

As shown in figure 1, the electrical motor 2 is located in a tubular body 40 outside of which a winding roller 11 is placed around which the flexible element, not shown, is rolled/unrolled.

The electrical motor 2 is properly connected to the winding roller 11 through a reduction unit 12 and a pulley P.

The winding roller 11 is associated with mechanical limit stop means 13, 14, each corresponding to a either clockwise or counterclockwise direction of rotation of the motor 2.

In figure 2 the arrangement of one of the limit stop means 13, 14 is illustrated, namely the mechanical limit stop means 13 associated, for example, to the rotation of the motor determined by the insertion of the winding 7 of the motor 2 to the line wire 4 through the switch 10.

It is obvious that the arrangement of the other mechanical limit stop means 14 referring to the other direction of rotation determined by the winding 8 of the motor 2 will be absolutely equivalent.

Regarding in particular the mechanical limit stop means 13, they are basically made of a micro switch 15 of the normally closed type whose terminals 16 and 17 are series connected to the leg which, from the line wire 4, feeds the winding 7.

The actuation of the limit stop 13, and thus its opening, is carried out through the contact of an actuator 18 which slides parallel to a central rotating gear 21 with a basically longitudinal development put in rotation by the winding roller 11.

The actuator 18 in short can translate along a direction 22 parallel to the direction defined by the axis X of said central gear 21 and it takes up positions corresponding to the number of turns carried out by the winding roller 11 and therefore to the length of the flexible element rolled on it.

Appropriate adjustment means 23, 24 allow to carry out the adjustment of the position of the mechanical limit stop means 13, 14 with respect to the actuator 18, in accordance with known adjustment techniques.

According to the invention the control device 1 comprises position detecting means of the actuator 18, generally indicated with 25, and a logical unit, generally indicated with 26, electrically connected to the detecting means 25 and suitable to determine the variation of the operation with nominal torque of the motor 2 for a time interval which begins before the actuation of the mechanical limit stop means 13, 14.

Regarding the detecting means 25 they are made of detectors of the optical kind comprising an emitter 27 and a receiver 28 arranged opposite to each other among which the actuator 18 translates.

The emitter 27 and the receiver 28 are connected to the logical unit 26 which is fed at its ends 29, 30 through the voltage drawn across of the electrical brake 19. The logical unit 26 also has an output 31 fit to drive the two contacts 33, 34 of a relay 32.

The first contact 33 of said contacts of the relay 32 allows the disconnection/connection of the main condenser 9 between the two windings 7, 8 of the motor 2.

The other contact 34 of the relay 32 allows the connection/disconnection of an auxiliary condenser 35 for the operation with reduced torque of the motor 2.

For this purpose the capacity of the auxiliary condenser 35 turns out to be lower than the capacity of the main condenser 9.

During the operation, assuming that the position of the switch 10 allows the connection of the line wire 4 to the terminal 10a, the winding 7 turns out to be fed and the electrical motor 2 rotates, for example, according to the winding direction of the flexible element connected to the winding roller 11.

During the normal winding phase, the actuator 18 slides along the direction 22 towards the micro switch 15 by not involving the area comprised between the emitter 27 and the receiver 28 of the optical detecting means 25.

In such phase the micro switch 15 turns out to be closed and the logical unit 26 keeps the contacts 33, 34 of the relay 32 in such a position for which the main condenser 9 is connected while the auxiliary condenser 35 is disconnected.

The rotation of the motor 2 and consequently of the winding roller 11 therefore takes place according to an operation with a nominal torque whose value is determined by the capacity of the main condenser 9.

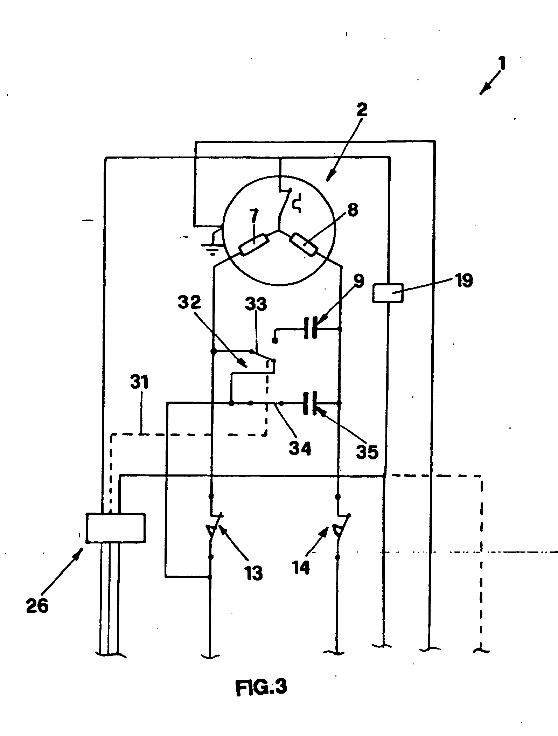

Close to reaching the limit stop 13 and just before the contact occurs, the actuator 18 touches the area comprised between the emitter 27 and the receiver 28. Such situation is detected by the logical unit 26 which provides to switch over the contacts 33 and 34 of the relay 32 by carrying out the disconnection of the main condenser 9 and the simultaneous connection of the auxiliary condenser 35, as shown in figure 3.

From this time instant at the ends 7b, 8b of the windings 7, 8, the motor 2 operates with the auxiliary condenser 35 and the operation of the same motor 2 turns out to be with reduced torque compared to the previous operation.

This situation lasts until the contacts 33 and 34 of the relay 32 are kept in such a position. The opening of the limit stop 13 following the contact of the actuator 18 with the micro switch 15 does not modify the operation with reduced torque of the electrical motor 2.

Such phase ends when the logical unit 26 takes the contacts 33, 34 of the relay 32 back to the initial conditions and the winding 7 of the motor 2 turns out to be no longer fed by the line wire 4 because the micro switch 15, is open and therefore the motor 2 is still.

It must be noticed that the duration of the time interval during which the relay 32 is made to operate with reduced torque is determined by the logical unit 26.

For such reason the value of the duration of said time interval is appropriately set and stored into corresponding storage means 26a of the logical unit 26 during the assembly and testing phase carried out by the operator.

The logical unit 26 can therefore be advantageously made of a microprocessor equipped with appropriate programming and storage units.

It must also be noticed that the logical unit 26 being connected for the parallel feeding to the electrical brake 19, will turn out to be operative until at least one winding 7, 8 of the motor is connected to the line wire 4.

In order to facilitate the testing operations, as shown in figure 2a, the end 30 of the logical unit 26 is connected to a terminal 36 different from the wires 4, 5, 6 of the feeding network 3.

Such configuration allows to carry out the preliminary calibration operations of the limit stops 13, 14 through corresponding adjustment means 23, 24 without the intervention of the operation with reduced torque because the logical unit 26 is not fed.

When the calibration is concluded and before the device 1 becomes operative, a bridge 37 is carried out for the electrical connection of the feeding's end 30 to the neutral wire 5.

In such situation the logical unit 26 is fed and the operation is completely equivalent to the previously described case.

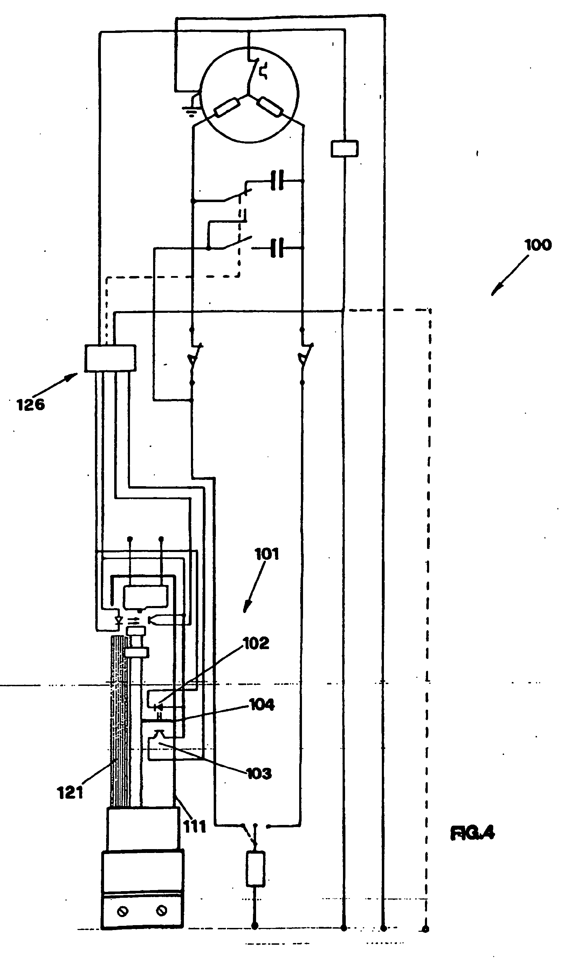

An embodiment of the device of figure 3 generally indicated with 100 is shown in figure 4, said device differs from the previously described device because it comprises a detecting unit, generally indicated with 101, associated to the winding roller 111 and connected to the logical unit 126.

The detecting unit 101 consists of a transmitter 102 and a receiver 103 among which a rotating segmented disc 104 associated with the winding roller 111 is interposed.

More specifically, the rotation of the winding roller 111 determines the rotation of the rotating disc 104 and similarly the locking of the winding roller 111 determines the locking of the rotating disc 104.

The operation of the here illustrated embodiment of the device, differs from the previously described case because the electrical motor 2 is made to operate with reduced torque for a time interval which begins when the actuator 18 touches the area comprised between the emitter 27 and the receiver 28 and ends when the logical unit 126 detects, through the detecting unit 101, the locking of the winding roller 111 and thus of the electrical motor 2.

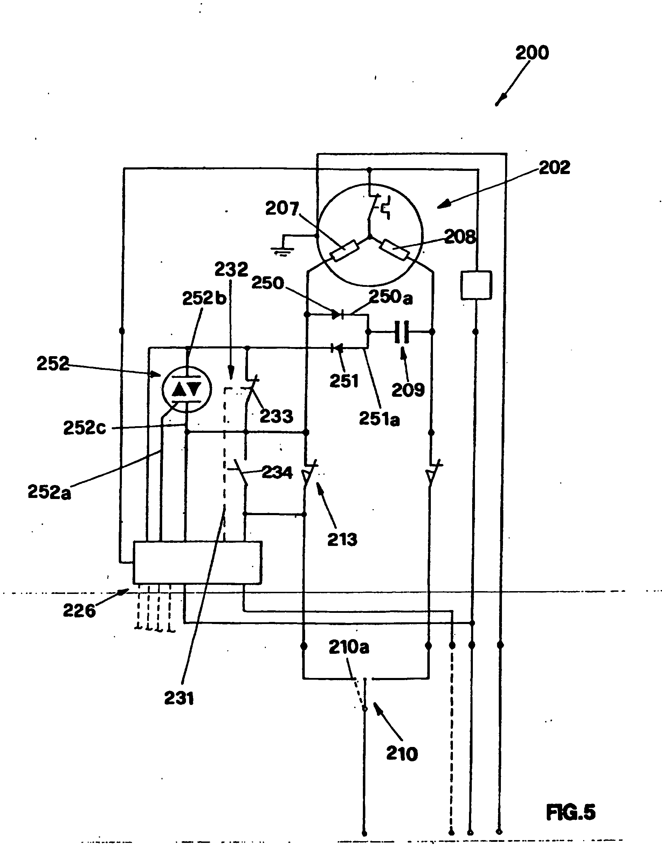

Figure 5 shows another embodiment of the invented device, generally indicated with 200, which differs from the previously described ones due to the different manner of reducing the working torque of the motor.

As shown in figure 5, the main condenser 209 is connected in series to a first diode 250 through its cathode 250a and thus connected to the windings 207, 208 of the motor 202.

The anode 251 a, of a second diode 251 whose cathode is connected to a thyristor 252, preferably but not necessarily made of a TRIAC, having the control gate 252a connected to the computing unit 226, is connected to the cathode 250a of the diode 250.

A relay 232 with two contacts 233, 234 is driven by the logical unit 226 through the output 231. More specifically, the first contact 233 of the relay 232 is generally closed and is connected between the first anode 252b and the second anode 252c of the thyristor 252 while the second contact 234 is generally open, is connected to the second anode 252c of the thyristor 252 and in parallel to the limit stop 213.

The operation will be described, like in the previous case, with the switch 210 in the position of contact with the terminal 210a and therefore with the winding 207 connected to the line wire of the feeding network.

During the operative phase with nominal torque, the contact 233 of the relay 232 is closed while the second contact 234 is open so as the first anode 252b and the second anode 252c of the thyristor 252 turn out to be short circuited.

In such situation, the main condenser 209 is connected in parallel to the windings 207, 208 through the two diodes 250, 251 reciprocally arranged in parallel in phase opposition.

It is clear that during the positive half wave the diode 250 conducts, while the diode 251 is locked. During the negative half wave the situation becomes the opposite, with the diode 251 conducting and the diode 250 locked.

The operation is therefore equivalent to the situation wherein the main condenser 209 is directly connected in parallel to the two windings 207, 208.

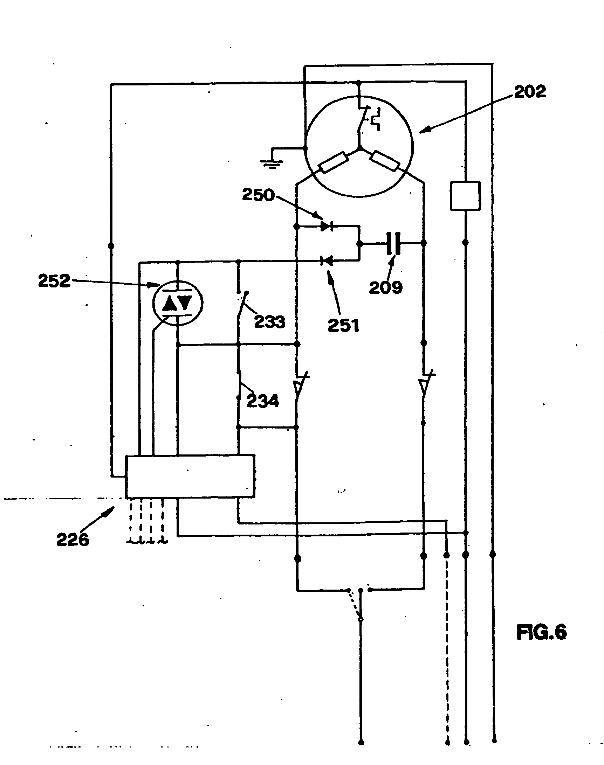

The starting instant of the operation with reduced torque is similarly determined as in the previously described cases, and that is by the detecting unit 25, not shown in figures 5 and 6, which causes the opening of the first contact 233 and the closing of the second contact 234 of the relay 232, as shown in figure 6.

The operation of such circuit with reduced torque can be divided in the two half cycles corresponding to the feeding network.

During the positive half wave, the diode 250 conducts while the diode 251 is locked and the nominal voltage is applied to the ends of the condenser 209 like in the case of the operation with nominal torque.

During the negative half wave, the diode 250 is locked while the diode 251 conducts so that the main condenser 209 is series connected to the thyristor 252.

Through the signal modulation of the gate 252a, the logical unit 226 controls the opening or closing of the thyristor 252 by chocking the voltage applied to the main condenser 209 determining a variation of the average value in the cycle.

It is obvious that the percentage of reduction of the torque of the motor depends on the enable time interval of the gate 252a carried out by the logical unit 226 and it can be advantageously set through the programming of the same logical unit 226.

A possible course of the voltage at the ends of the main condenser 209 as a function of time is shown in Figure 7 on the X axis.

It must be noticed that during the positive half wave, the course of the voltage matches the operation with nominal torque while in the negative half wave the voltage shifts from the value of the nominal torque, illustrated with a dotted line.

The duration of the time interval in the operation with reduced torque can be of the set time type in which case an approach as shown in figure 2 is used either with the sole detecting means of the optical kind or by using the approach of figure 5 wherein the time is determined by the detection of the locking of the winding roller.

The logical unit, in the various embodiments, can be advantageously made of a microprocessor or of an equivalent state of the art electronic device.

It is clear from what has been previously said that the invented device in the illustrated embodiments achieves the preset objects and advantages.

More specifically, the operation with reduced torque turns out to be independent from the operation of the mechanical limit stop means and it can be advantageously programmed in its duration through simple programming operation of the logical unit.

In the operative phase further variations neither described nor shown in the figures can be brought to the invention's device.

Said variations can consist, for example, in either using electronic devices of a different kind but equivalent to the used devices, or using different detecting means such as for example HALL sensors.

Such and further variations, neither described nor shown, whenever they fall within the scope of the invention recited in the following claims should be considered anyhow protected by the present patent.

## Claims

1. A control device (1;100;200) for rolling/unrolling units of flexible elements of the kind which comprises an asynchronous mono phase electric motor (2; 202) equipped with at least two windings (7,8; 207, 208) that allow the rotation in the two directions provided with a main condenser(9; 209) for the operation with a nominal torque arranged between said two windings (7, 8; 207, 208), said motor (2; 202) being connected to a winding roller (11; 111) for the rolling/unrolling of said flexible elements and associated with mechanical limit stop means (13, 14; 213), **characterized by** comprising position detecting means (25) of an actuator (18) suitable to activate said limit stop means (13, 14; 213) associated to the movement of said winding roller (11; 111) and at least one logical unit (26; 126; 226) electrically connected to said detecting means (25) suitable to control said motor (2; 202) with a reduced torque compared to the nominal torque for a time interval which starts before the actuation of said mechanical limit stop means (11,14; 213).

2. The control device (1; 200) according to claim 1), **characterized in that** said logical unit (26; 226) is equipped with programmable storage means (26a) in order to set and store the duration of said time interval.

3. The control device (100) according to claim 1), **characterized in that** the end of said time interval is determined by the locking of said winding roller (111).

4. The control device (1; 100; 200) according to claim 1), **characterized in that** said detecting means (25) comprise a detecting device of the optical type.

5. The control device (1; 100; 200) according to claim 4), **characterized in that** said detecting device of the optical type (25) comprises a transmitter (27) and a receiver (28) among which said actuator (18) mechanically connected to said winding roller (11; 111) translates and which sets it in motion during the rotation.

6. The control device (1; 100; 200) according to claim 1), **characterized in that** said detecting means (25) consist of a detecting device with a HALL effect.

7. The control device (100) according to claim 1), **characterized by** comprising a detecting unit (101) associated to said winding roller (111) suitable to defect its rotation and electrically connected to said logical unit (126).

8. The control device (100) according to claim 7), **characterized in that** said detecting unit (101) is of the optical type and consists of a transmitter (102) and a receiver (103) among which a rotating segmented disc (104) is interposed associated with said winding roller(111).

9. The control device (1; 100; 200) according to claim 1), **characterized in that** said variation of the operation of said motor (2; 202) provides for the reduction of the nominal torque.

10. The control device (1; 100) according to claim 9), **characterized in that** said reduction is achieved through the disconnection of said main condenser (9) and the connection of a lower capacity auxiliary condenser (35).

11. The control device (1; 100) according to claim 10), **characterized in that** said disconnection and said connection are carried out by a relay (32) controlled by said logical unit (26; 126).

12. The control device (200) according to claim 9), **characterized in that** said torque reduction is achieved with the chocking of the voltage at the ends of said main condenser (209).

13. The control device (200) according to claim 12), **characterized in that** said chocking is carried out by a thyristor (252) controlled by said logical unit (226).

14. The control device (200) according to claim 13), **characterized in that** said thyristor (252) consists of a TRIAC.

15. The control device (1; 100; 200) according to claim 1), **characterized by** comprising an electrical brake (19) arranged between said feeding network (3) and said windings (7, 8; 207, 208) suitable to carry out the locking of said motor (2; 202).

16. The control device (1; 100; 200) according to claim 15), **characterized in that** the feeding ends (29, 30) of said logical unit (26; 126; 226) are parallel connected to said electrical brake (19).

17. The control device (1; 100; 200) according to claim 1), **characterized in that** the feeding ends (29, 30) of said logical unit (26; 126; 226) are connected to said feeding network (3).

18. The control device (1; 100; 200) according to claim 1), **characterized in that** said logical unit (26; 126; 226) consist of a microprocessor.

## Patentansprüche

1. Steuervorrichtung (1; 100; 200) zum Aufrollen/Abrollen von Einheiten biegsamer Elemente vom Typ einen asynchronen Einphasen-Elektromotor (2; 202) umfassend, der mit zumindest zwei Wicklungen (7, 8; 207, 208) ausgestattet ist, welche die Rotation in die beiden Richtungen ermöglichen, und der mit einem zwischen den zwei Wicklungen (7, 8; 207; 208) angeordneten Hauptkondensator (9; 209) für den Betrieb mit einem Nenndrehmoment versehen ist, wobei der Motor (2; 202) mit einer Wickelrolle (11; 111) zum Aufrollen/Abrollen der biegsamen Elemente verbunden ist und einem mechanischen Endabschaltungsmittel (13, 14; 213) zugeordnet ist, **dadurch gekennzeichnet, dass** sie ein Positionsdetektionsmittel (25) eines Aktuators (18), der zur Betätigung des der Bewegung der Wickelrolle (11; 111) zugeordneten Endabschaltungsmittels (13, 14; 213) geeignet ist, und zumindest einer Logikeinheit (26; 126; 226) umfasst, die mit dem Detektionsmittel (25) elektrisch verbunden ist und dazu geeignet ist, den Motor (2; 202) für einen Zeitraum, der vor der Betätigung des mechanischen Endabschaltungsmittels (13, 14; 213) beginnt, mit einem im Vergleich zum Nenndrehmoment geringeren Drehmoment zu steuern.

2. Steuervorrichtung (1; 200) nach Anspruch 1), **dadurch gekennzeichnet, dass** die Logikeinheit (26; 226) mit einem programmierbaren Speichermittel (26a) ausgestattet ist, um die Dauer des Zeitraums festzulegen und zu speichern.

3. Steuervorrichtung (100) nach Anspruch 1), **dadurch gekennzeichnet, dass** das Ende des Zeitraums durch das Sperren der Wickelrolle (111) bestimmt ist.

4. Steuervorrichtung (1; 100; 200) nach Anspruch 1), **dadurch gekennzeichnet, dass** das Detektionsmittel (25) eine Detektionsvorrichtung vom optischen Typ umfasst.

5. Steuervorrichtung (1; 100; 200) nach Anspruch 4), **dadurch gekennzeichnet, dass** die Detektionsvorrichtung vom optischen Typ (25) einen Sender (27) und einen Empfänger (28) umfasst, zwischen denen der Aktuator (18) wandelt, der mit der Wickelrolle (11; 111) mechanisch verbunden ist, die diesen während der Rotation in Bewegung versetzt.

6. Steuervorrichtung (1; 100; 200) nach Anspruch 1), **dadurch gekennzeichnet, dass** das Detektionsmittel (25) aus einer Detektionsvorrichtung mit einem Hall-Effekt besteht.

7. Steuervorrichtung (100) nach Anspruch 1), **dadurch gekennzeichnet, dass** sie eine der Wickelrolle (111) zugeordnete Detektionseinheit (101) umfasst, die zur Detektion der Rotation dieser geeignet ist und die mit der Logikeinheit (126) verbunden ist.

8. Steuervorrichtung (100) nach Anspruch 7), **dadurch gekennzeichnet, dass** die Detektionseinheit (101) vom optischen Typ ist und aus einem Sender (102) und einem Empfänger (103) besteht, zwischen denen eine sich drehende segmentierte Scheibe (104) angeordnet ist, die der Wickelrolle (111) zugeordnet ist.

9. Steuervorrichtung (1; 100; 200) nach Anspruch 1), **dadurch gekennzeichnet, dass** die Änderung des Betriebs des Motors (2; 202) für die Reduktion des Nenndrehmoments sorgt.

10. Steuervorrichtung (1; 100) nach Anspruch 9), **dadurch gekennzeichnet, dass** die Reduktion durch das Unterbrechen der Verbindung mit dem Hauptkondensator (9) und das Herstellen der Verbindung mit einem Hilfskondensator (35) mit niedrigerer Kapazität herbeigeführt wird.

11. Steuervorrichtung (1; 100) nach Anspruch 10), **dadurch gekennzeichnet, dass** das Unterbrechen und das Herstellen der Verbindung von einem von der Logikeinheit (26; 126) gesteuerten Relais (32) ausgeführt wird.

12. Steuervorrichtung (200) nach Anspruch 9), **dadurch gekennzeichnet, dass** die Reduktion des Drehmoments durch das Drosseln der Spannung an den Enden des Hauptkondensators (209) herbeigeführt wird.

13. Steuervorrichtung (200) nach Anspruch 12), **dadurch gekennzeichnet, dass** das Drosseln von einem von der Logikeinheit (226) gesteuerten Thyristor (252) ausgeführt wird.

14. Steuervorrichtung (200) nach Anspruch 13), **dadurch gekennzeichnet, dass** der Thyristor (252) aus einem Triac besteht.

15. Steuervorrichtung (1; 100; 200) nach Anspruch 1), **gekennzeichnet durch** das Umfassen einer Elektrobremse (19), die zwischen dem Speisenetz (3) und den Wicklungen (7, 8; 207, 208) angeordnet ist und dazu geeignet ist, das Sperren des Motors (2; 202) auszuführen.

16. Steuervorrichtung (1; 100; 200) nach Anspruch 15), **dadurch gekennzeichnet, dass** die Einspeisungsenden (29, 30) der Logikeinheit (26; 126; 226) mit der Elektrobremse (19) parallel geschaltet sind.

17. Steuervorrichtung (1; 100; 200) nach Anspruch 1), **dadurch gekennzeichnet, dass** die Einspeisungsenden (29, 30) der Logikeinheit (26; 126; 226) mit dem Speisenetz (3) verbunden sind.

18. Steuervorrichtung (1; 100; 200) nach Anspruch 1), **dadurch gekennzeichnet, dass** die Logikeinheit (26; 126; 226) aus einem Mikroprozessor besteht.

## Revendications

1. Un dispositif de contrôle (1; 100; 200) pour des unités d'enroulement/déroulement d'éléments flexibles du type qui comprend un moteur électrique asynchrone monophasé (2; 202) équipé d'au moins deux enroulements (7, 8; 207, 208) qui permettent la rotation dans les deux directions équipé d'un condensateur principal (9; 209) pour le fonctionnement avec un couple nominal situé entre lesdits deux enroulements (7, 8; 207, 208), ledit moteur (2; 202) étant relié à un rouleau d'enroulement (11; 111) pour l'enroulement/déroulement desdits éléments flexibles et associé avec des moyens d'arrêt de fin de course (13, 14; 213), **caractérisé en ce qu'**il comprend des moyens de détection (25) de la position d'un actionneur (18) indiqué pour actionner lesdits moyens d'arrêt de fin de course (13, 14; 213) associé au mouvement dudit rouleau d'enroulement (11; 111) et au moins une unité logique (26; 126; 226) reliée électriquement auxdits moyens de détection (25) indiquée pour contrôler ledit moteur (2; 202) avec un couple réduit comparé au couple nominal pour un intervalle de temps qui commence avant l'activation desdits moyens d'arrêt de fin de course (13, 14; 213).

2. Le dispositif de contrôle (1; 200) selon la revendication 1) **caractérisé en ce que** ladite unité logique (26; 226) est équipée de moyens de mémorisation programmables (26a) pour programmer et mémoriser la durée dudit intervalle de temps.

3. Le dispositif de contrôle (100) selon la revendication 1) **caractérisé en ce que** la fin dudit intervalle de temps est déterminée par le blocage dudit rouleau d'enroulement (111).

4. Le dispositif de contrôle (1; 100; 200) selon la revendication 1) **caractérisé en ce que** lesdits moyens de détection (25) comprennent un dispositif de détection du type optique.

5. Le dispositif de contrôle (1; 100; 200) selon la revendication 4) **caractérisé en ce que** ledit dispositif de détection du type optique (25) comprend un émetteur (27) et un récepteur (28) entre lesquels ledit actionneur (18) relié mécaniquement audit rouleau d'enroulement (11; 111) effectue une translation qui le met en mouvement durant la rotation.

6. Le dispositif de contrôle (1; 100; 200) selon la revendication 1) **caractérisé en ce que** lesdits moyens de détection (25) consistent en un dispositif de détection à effet HALL.

7. Le dispositif de contrôle (100) selon la revendication 1) **caractérisé en ce qu'**il comprend une unité de détection (101) associée audit rouleau d'enroulement (111) indiquée pour détecter sa rotation et reliée électriquement à ladite unité logique (126).

8. Le dispositif de contrôle (100) selon la revendication 7) **caractérisé en ce que** ladite unité de détection (101) est du type optique et se compose d'un émetteur (102) et un récepteur (103) entre lesquels un disque segmenté pivotant (104) est interposé coopérant avec ledit rouleau d'enroulement (111).

9. Le dispositif de contrôle (1; 100; 200) selon la revendication 1) **caractérisé en ce que** ladite variation du fonctionnement dudit moteur (2; 202) prévoit la réduction du couple nominal.

10. Le dispositif de contrôle (1; 100) selon la revendication 9) **caractérisé en ce que** ladite réduction est obtenue au moyen de la déconnexion dudit condensateur principal (9) et la connexion d'un condensateur auxiliaire de capacité inférieure (35).

11. Le dispositif de contrôle (1; 100) selon la revendication 10) **caractérisé en ce que** ladite déconnexion et ladite connexion sont exécutées au moyen d'un relais (32) commandé par une unité logique (26; 126).

12. Le dispositif de contrôle (200) selon la revendication 9) **caractérisé en ce que** ladite réduction du couple est obtenue par la partialisation de la tension aux extrémités dudit condensateur principal (209).

13. Le dispositif de contrôle (200) selon la revendication 12) **caractérisé en ce que** ladite partialisation est obtenue par un thyristor (252) commandé par ladite unité logique (226).

14. Le dispositif de contrôle (200) selon la revendication 13) **caractérisé en ce que** ledit thyristor (252) consiste en un TRIAC.

15. Le dispositif de contrôle (1; 100; 200) selon la revendication 1) **caractérisé en ce qu'**il comprend un frein électrique (19) situé entre ledit réseau d'alimentation (3) et lesdits enroulements (7, 8; 207, 208) indiqué pour réaliser le blocage dudit moteur (2; 202).

16. Le dispositif de contrôle (1; 100; 200) selon la revendication 15) **caractérisé en ce que** les extrémités d'alimentation (29, 30) de ladite unité logique (26; 126; 226) sont reliées en parallèle audit frein électrique (19).

17. Le dispositif de contrôle (1; 100; 200) selon la revendication 1) **caractérisé en ce que** les extrémités d'alimentation (29, 30) de ladite unité logique (26; 126; 226) sont reliées audit réseau d'alimentation (3).

18. Le dispositif de contrôle (1; 100; 200) selon la revendication 1) **caractérisé en ce que** ladite unité logique (26; 126; 226) consiste en un microprocesseur.
